# EUROPÄISCHE PATENTANMELDUNG

(11) **EP 4 059 883 A1**
(43) Veröffentlichungstag der Anmeldung: **21.09.2022**
(21) Anmeldenummer: 21000077.4
(22) Anmeldetag: 15.03.2021
(51) Int. Cl.: C01B 3/38, C01B 13/02, F17C 5/00, C01B 32/50

(54) **ERRICHTUNG VON WASSERSTOFF TANKSTELLEN**

(71) Anmelder: Pilema technische Produkte GmbH, 06217 Merseburg (DE)
(72) Erfinder: Schwienbacher, Helmut, 39012 Meran (BZ) (IT)

(57) **Zusammenfassung**

Die vorliegende Erfindung betrifft den gefahrlosen Betrieb eine Wasserstofftankstelle, bei der die Produktion, die Lagerung von Wasserstoff und die Steuerung der Betankung an und von einem der Tankstelle sehr naheliegenden Produktionsstandort aus durchgeführt wird. Der Wasserstoff wird zum Ort der Betankung mit einer 5 mm Ø Hochdruckkapillare geführt, welche pro km bei 1000 bar lediglich einen Energie-Inhalt von 59 kW hat.

Die vorliegende Erfindung basiert auf der Tatsache, dass landwirtschaftliche Unternehmen in verschiedenen Ländern, wie z.B. in Italien, berechtigt sind, aus der eigenen Produktion, wie z. B. aus dem erzeugten Biogas, direkt Energie oder auch Treibstoffe herzustellen und diese zu vertreiben.

Außerdem nutzt die vorliegende Erfindung die Tatsache, dass aus dem Biogas produziertes Biomethan, in das Erdgasnetz eingespeist und an jedem anderen Ort des Landes wieder als "virtuelles" und grünes Biomethan entnommen werden kann.

Der grüne Wasserstoff kann also an sehr vielen Orten an Erdgasleitungen und in daneben liegenden Agrarflächen mit einer Autotherm - Reforming Anlage aus virtuellem Biomethan produziert werden.

Aufgrund der landesweiten engmaschigen Vernetzung des Erdgasnetzes und der Tatsache dass Agrargrundstücke fast überall verfügbar sind, lässt sich eine ohne große Schwierigkeiten eine Wasserstoff Infrastruktur relativ schnell und kostengünstig mit dieser vorliegenden Erfindung errichten.

## Beschreibung

### Gebiet der Erfindung.

Die europäische Union will bis 2050 CO₂ neutral werden. Eines der Hauptziele ist die Einführung von mit Wasserstoff (H₂) betriebenen Fahrzeugen. Dabei muss ein effizientes Infrastruktursystem mit Wasserstoff Tankstellen möglichst mit jeweils einer maximalen Entfernung von 50 km errichtet werden.

Die vorliegende Erfindung betrifft den gefahrlosen Betrieb eine Wasserstofftankstelle, bei der die Produktion, die Lagerung von Wasserstoff und die Steuerung der Betankung von einem der Tankstelle sehr nahe gelegenen sicheren Produktions- Standort aus durchgeführt wird.

Die gesamte Technologie ist einfach und der Ort der Betankung, wo immer Fahrzeuge und Personen in der Nähe sind, bleibt gefahrlos.

Zur Produktion eingesetzt wird eine Autotherm- Reforming Anlage, welche aus virtuellem Biomethan aus dem Erdgasnetz grünen Wasserstoff zu sehr günstigen Bedingungen in der nächsten Nähe der geplanten Tankstelle produziert und diese mit Wasserstoff versorgt.

### Der Stand der Technik.

Die heute bestehenden, geplanten und in Bau befindlichen H₂ -Tankstellen sind kompliziert und gefährlich, weil entweder der hochentzündliche Wasserstoff an der Tankstelle mit Elektrolyse produziert wird oder der Wasserstoff antransportiert und vor Ort in Behältern gelagert wird.

Es werden immer größere Mengen Wasserstoff nahe einem Ort, wo auch Personen und Fahrzeuge in der Nähe sind und deshalb erhöhte Brandgefahr besteht, gelagert. Der Wasserstoff (H₂) wird angeliefert und in Gasflaschen ("Flaschenbündeln") oder Hochtanks, meistens bei niedrigem Druck in der Nähe der Zapfsäule bevorratet. Dann wird vor Ort mit einem Verdichter ein Teil, üblicherweise auf 1000 bar komprimiert, in Hochdruck - speichern (mindestens 6 - 10 Tankfüllungen) zwischengelagert und damit die Betankung der Fahrzeuge durchgeführt.

Dieses Verfahren ist nicht optimal, weil ein voller Tanklaster nur geringe Mengen an Wasserstoff, meist weniger als 1000 kg, transportieren kann. Die Anlieferung ist deshalb teuer, dabei wird meistens auch CO₂ freigesetzt und der Tankvorgang ist auch nicht ungefährlich, weil die Betankung mit einer Lagerung von hochkomprimierten Wasserstoff im Bereich der Tankstelle durchgeführt werden muss.

### Offenbarung der Erfindung

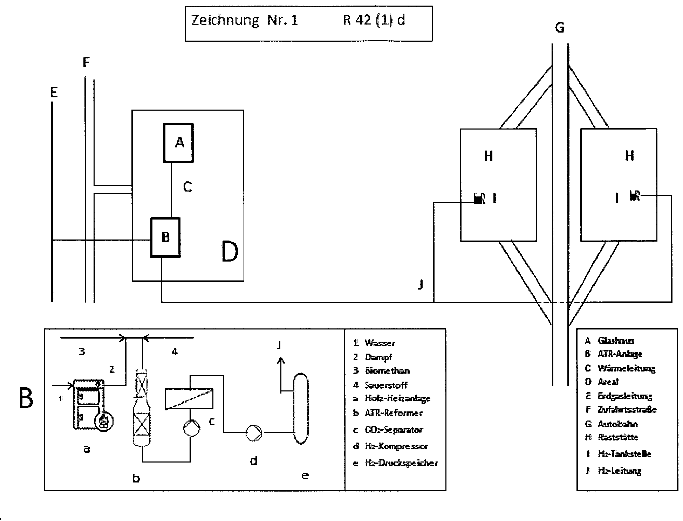

Die vorliegende Erfindung basiert auf der Tatsache, dass landwirtschaftliche Unternehmen in verschiedenen Ländern, wie z.B. in Italien, berechtigt sind, aus der eigenen Produktion, wie z. B. aus dem erzeugten Biogas, direkt Energie oder auch Treibstoffe herzustellen und diese zu vertreiben. Diese Umwandlung kann auch überall im Lande auf Agrargrund erfolgen. Außerdem nutzt die vorliegende Erfindung die Tatsache, dass aus dem Biogas produziertes Biomethan in das Erdgasnetz eingespeist und an jedem anderen Ort des Landes wieder als "virtuelles" und grünes Biomethan entnommen werden kann.
Das Biomethan wird nun in das Erdgasnetz eingespeist. Das landwirtschaftliche Unternehmen oder ein vom Unternehmen Beauftragter, kann überall im Lande auf landwirtschaftlichen Grund aus seinem Biomethan Wasserstoff produzieren. Errichtet wird deshalb am Kombi-Punkt einer Erdgasleitung mit einer geplanten Tankstelle auf Landwirtschaftsgrund, praktisch ohne Formalitäten betreffend den Bebauungsplan, eine Autotherm Reforming Anlage, welche mit "virtuellem" Erdgas versorgt wird, H₂ produziert und damit von dort aus die Tankstelle beliefert.
Technisch sind für eine einwandfreie Betankung Entfernungen zwischen Produktion und Tankstelle von bis zu 100 km möglich; für die Auswahl des Grundstücks sind deshalb nur die Machbarkeit, die Bebauungsplan Kriterien und die Möglichkeiten der Zuleitung zur Tankstelle auschlaggebend.
Es wird nun auf dem Grundstück mit landwirtschaftlicher Widmung mit dem Autotherm-Reformer, ein Glashaus für die vorgeschriebene Wärmenutzung, eine H₂ Lagerung und eine H₂- Kapillarleitung bis zur Tankstelle gebaut und an der Tankstelle die Zapfsäule mit Fernbetankung installiert und in Betrieb genommen.
Der Weg zur Ausführung und Realisierung dieser Technologie wird aktuell hauptsächlich über die Betreiber von mautpflichtigen Autobahnen ermöglicht, deshalb wird eine entsprechende Verfahrensskizze als Beispiel mit Bezug auf eine Autobahn gewählt. (Siehe Zeichnung 1)

### Die möglichen Kapazitäten:

Es gibt in Europa mehr als 10.000 Biogasanlagen, davon in Deutschland über 8000 und in Italien über 1200 Anlagen. Im Durchschnitt produzieren diese Anlagen circa 1000 t -1400 t Biomethan pro Jahr, es stehen also allein in Italien mehr als 10 Millionen t Biomethan zur Verfügung und daraus können mit dem ATR- Verfahren über 3,5 Millionen t Wasserstoff für Tankstellen hergestellt werden.

### Die Technologie

Beim ATR - Reforming wird ein kleiner Teil von Biomethan (ca.10 %) mit Sauerstoff verbrannt, um das Methan und den Dampf auf Reaktionstemperatur zu bringen. Im Katalysator Bett des Reformers wird die Reaktion zu Wasserstoff gestartet und nach Abkühlung durch die Shift- Reaktion beendet. Autotherm weil ein großer Teil der Reaktionswärme zurückgeführt wird. Die überschüssige Wärme wird zur Beheizung des im Areal errichteten Glashauses für Pflanzenzüchtungen eingesetzt.

Im CO_{2/}H₂ Separator wird der Wasserstoff auf die benötigte Reinheit gebracht und nach Kompression bei circa 1000 bar gespeichert.

Kommt von der Füllkupplung eines Fahrzeugs an der Tankstelle die Anforderung nach Wasserstoff, öffnet sich das Ventil des Druckspeichers in der Reforming Anlage und der Wasserstoff wird über eine Leitung an die Tankstelle zur Befüllung transportiert. Nach Beendigung der Betankung wird die Leitung, von der Reforming Anlage aus, auf gefahrlose 3 bar reduziert. Der Kompressor hält den Druck des Speichers während der Betankung konstant.

### Die Sicherheit des Leitungssystems

Zum Transport des Wasserstoffs vom Reformer zur Tankstelle werden 5 - 9 mm Ø Hochdruck Kapillaren verwendet, welche beide Systeme miteinander verbinden. Die Kapillarleitungen werden oberirdisch geführt. Sie werden am besten an ein Drahtseil gebunden, welches auf Leitungsmasten befestigt ist und so zur Tankstelle geführt. Um bei Bruch oder Brand der Kapillaren Gefahren auszuschließen, werden Höhen für die Leitung von über 2,5 m bevorzugt. Bei Unterführungen wird die Kapillare in Schutzrohren geführt, welche zwei freie Auspuffe haben, welche ebenfalls mindestens 2,5 m hoch, aber höher als die angrenzenden Baulichkeiten sind.

Der Transport ist gefahrlos, weil Wassersoff 14-mal leichter als Luft ist; bei Bruch oder Brand entstehen nach unten keine Gefahren. Bei Austritt entweicht der Wasserstoff mit hoher Geschwindigkeit nach oben und bei Brand bildet sich eine senkrecht nach oben gerichtete Flamme.

Eine Kapillare mit 5 mm Ø enthält bei 1000 bar 19,6 m³ H₂ pro km, das entspricht einer gespeicherten Gesamt-Energie von 57 KW pro Kilometer. (ca.6 It Dieselkraftstoff).

Das System ist mit Bezug auf die Sicherheit optimal. Die Produktion erfolgt direkt ohne Straßen Transport und ist bei variierendem Bedarf äußerst anpassungsfähig.

### Die wirtschaftlichen Vorteile des erfindungsgemäßen Verfahrens :

Auch bei einer hohen Bewertung des Biomethan mit 500 €/t, liegen die OPEX Kosten pro Kg H₂ je nach Größe der Anlage mit circa 3 €/kg weit unter den aktuellen H₂ Herstellungskosten durch Elektrolyse. Zusätzlich können mit überschaubaren Kosten "stand by" Anlagen längs der Autobahnen ohne große Systemkosten errichtet werden, die, in Ländern in denen Maut für die Nutzung bezahlt wird, von den Autobahnträgern ohne Schwierigkeiten übernommen werden können. Wesentlich ist beim Wasserstoff als Treibstoff das Henne Ei Problem zu durchbrechen.

Letztendlich wird auch mit dieser H₂Technologie für die einheimische Agrarwirtschaft eine wesentliche und langfristige neue Einnahmsquelle erschlossen.

### Kurze Beschreibung der Zeichnungen

### Zeichnung Nr. 1

Die Zeichnung Nr. 1 stellt schematisch die vorliegende Erfindung dar. Von einer Erdgasleitung (C) wird Methan in das Grundstück (D), welches sich in der Nähe von zwei Autobahn (G) - Raststätten (H) befindet, geleitet.
Im Grundstück ist eine ATR-Reforming Anlage (B) aufgebaut. Die Anlage besteht aus einer mit Holz betriebenen Heizanlage (a), in welche Wasser (1) zur Dampferzeugung eingeleitet wird, einem ATR- Reformer (b), in welchen die Teilströme Biomethan (3), Sauerstoff (4) und Dampf (2) eingeleitet werden. Zur Herstellung der Reaktionstemperatur wird durch den Sauerstoff ein kleiner Teil des eingeleiteten Methans verbrannt, um die Reaktionstemperatur zu erreichen. Im Katalysatoren Bett startet die Reforming Reaktion und nach Abkühlung in einem zweiten Bett wird mit der Shift Reaktion die Umsetzung von Biomethan in Wasserstoff und CO₂ beendet. Der Wärmeüberschuss wird als Dampf in die Heizanlage zurückgeführt und von dort weiter verteilt.
Von 1t Biomethan werden 350 kg H₂ produziert. Das Gasgemisch aus dem Reformer wird durch einen Kompressor in den Separator (c) gepresst und dort das CO₂ abgetrennt. Der H₂ Hochdruckkompressor (d) presst dann den Wasserstoff mit 1000 bar in den Speicher (e).

Wird an der Tankstelle I derTankrüssel im H₂-Tank des Fahrzeugs verankert und gedrückt, dann startet der Tankvorgang durch Öffnung des H₂ Speicherventils und es fließt H₂ über die Leitung (J) in den Fahrzeugtank. Der H₂- Kompressor hält den Druck im Speicher aufrecht; nach Beendigung der Füllung, wird zur Gefahrenminderung der Druck der Kapillarleitung auf 3 bar abgesenkt.
Im Gelände ist ein mit Heizung versehenes Glashaus (A) aufgebaut, um die vom System abgegebene Wärme zu nutzen. Das Glashaus kann sofort nach Bauende in Betrieb genommen werden und die Wärme bis zum Betrieb der H₂ Anlage ganz oder teilweise von der Heizanlage beziehen.

### Beschreibung eines Wegs zur Ausführung der Erfindung

Zur Realisierung der hier vorliegenden Erfindung konzentrieren wir uns auf die Autobahnen und dies vor allem in Ländern, wo für die Nutzung Maut eingehoben wird.
Verwendet werden Karten der Methan Endverbrauchernetze, um z.B. in Italien von den über400 Raststätten jene herauszufiltern, die sehr nahe an einem Verteilungsnetz liegen. Für die positiven Fälle werden mit einem Eigentümer, der am günstigsten gelegenen landwirtschaftlichen Grundstücke, Vorverträge für Pacht oder Kauf erarbeitet und anschließend den Autobahngesellschaften Machbarkeitsstudien für die Realisierung der Vorhaben vorgelegt.

Ziel dieser Bemühungen ist der Bau von erfindungsgemäßen Anlagen, mit einer Vereinbarung mit den Leitungen der Autobahnen der Übernahme aller Standby Kosten bis zum wirtschaftlichen Betrieb der Vorhaben durch H₂ Verkäufe. Das technische Procedere der Wasserstoff Produktion und der Betankung wurde unter "Kurze Beschreibung der Zeichnungen" ausführlich dargelegt.

## Patentansprüche

1. Verfahren für den gefahrlosen Betrieb einer Wasserstoff (H₂)Tankstelle,
**dadurch gekennzeichnet,**
**dass** von einer Biogasanlage Biomethan(BM) in das Erdgasnetz eingespeist wird, dieses als virtuelles Biomethan an einem anderen Ort, wo in der Nähe der Bau einer H₂Tankstelle geplant ist, wieder entnommen wird, das Biomethan in ein nächstgelegenes freies Areal geführt wird, um dort in einer zu errichtenden ATR - Reforming Anlage grünen H₂ zu produzieren und damit die Tankstelle über eine Fernleitung zu bedienen.

2. Verfahren für den gefahrlosen Betrieb einer H₂ Tankstelle nach Anspruch1,
**dadurch gekennzeichnet,**
**dass** die Biogasanlage und die Unternehmung, welche die zu errichtende ATR-Reforming Anlage baut, grünen H₂ produzieren und damit die geplante Tankstelle über eine Fernleitung bedienen wird, landwirtschaftliche Betriebe sind.

3. Verfahren für den gefahrlosen Betrieb einer H₂ Tankstelle nach Anspruchl und 2,
**dadurch gekennzeichnet,**
**dass** die zu errichtende H₂- Produktionsanlage, neben den üblichen Einrichtungen für Büro und Personal, aus folgenden wesentlichen patentbezogenen Bauelementen besteht:
a. Heizanlage mit Holzprodukten zur Erzeugung von Dampf,
b. ATR- Reformer mit einem thermischen Wirkungsgrad von ca. 90 %,
c. Produktion von reinem Sauerstoff durch Membranabtrennung aus der Luft, oder von anderen "Upgrading"-Verfahren oder Entnahme aus Sauerstoffflaschen.
d. CO₂ - H₂ Separator und Polisher zur H₂ Reinigung bis auf 99,999 % Reinheit.
e. H₂- Mehrstufenkompressor mit End Druck von 1000 bar
f. H₂- Speicher (1000 bar) mit der Steuerung der Betankung.
g. Hochdruckkapillarleitung vom H₂-Speicher zur Tankeinheit
h. H₂-Tankstelle bestehend aus der Mess- und Bedienungseinrichtung, mindestens einer Zapfsäule und Zapfvorrichtungen zum Anschluss an die jeweiligen Fahrzeugtanks.
i. Glashaus zur Pflanzenzucht mit Anschluss an die Wärmeproduktion der Reforming Anlage.

4. Verfahren für den gefahrlosen Betrieb einer H₂ Tankstelle nach Anspruch 1 bis 3,
**dadurch gekennzeichnet,**
**dass** die Betankung von Fahrzeugen mit H₂ direkt vom Speicher der H₂-Produktionsanlage aus erfolgt, welche in einem sicheren Entfernung von der Tankstelle errichtet wird und an der Zapfsäule neben dem Gewichtsmessgerät lediglich ein Schlauch mit Füllkupplungen und dem Sicherheitszubehör eingebaut sind, an der Tankstelle selbst keine H₂-Lagerung vorhanden ist; wird der Tankrüssel im H₂ Tank des Fahrzeugs verankert und gedrückt, dann öffnet sich das Ventil am Speicher und die Betankung wird durchgeführt. Nach der Betankung wird der Druck aus der H₂ Leitung aus Sicherheitsgründen auf 3 bar abgesenkt.

5. Verfahren für den gefahrlosen Betrieb einer H₂ Tankstelle nach Anspruchl bis 4,
**dadurch gekennzeichnet,**
**dass** die H₂ Zufuhr zur Zapfsäule über 5 -9 mm Ø Kapillarrohre erfolgt, dass der Fülldruck bei 1000 bar liegt, dass die Leitung oberirdisch, bevorzugt über 2 m Höhe geführt wird und
**dass** bei Unterführung der Leitung unter Brücken oder Viadukten, diese in Schutzrohren verlegt werden, welche an den Enden offen sind und die Rohre an den Enden nach oben geführt werden, mit den Rohrenden höher als alle umgebenden Bauten.

6. Verfahren für den gefahrlosen Betrieb einer H2 Tankstelle nach Anspruchl bis 5,
**dadurch gekennzeichnet**
**dass** die ATR Reforming Anlage auch mit einer CO₂ Gewinnung ausgerüstet wird.

7. Verfahren nach Anspruch von 1 bis 6
**dadurch gekennzeichnet,**
**dass** der gesamte beim ATR - Reforming entstehende Wärmeüberschuss auch an einen externen Verbraucher abgegeben werden kann.
